# EUROPEAN PATENT APPLICATION

(11) **EP 4 624 803 A1**
(43) Date of publication of application: **01.10.2025**
(21) Application number: 23892864.2
(22) Date of filing: 10.01.2023
(51) Int. Cl.: F22B 1/02, F22B 37/22, F22B 37/10, F28D 20/00, F22D 1/50

(54) **SOLID ELECTRIC THERMAL STORAGE SUPERHEATED STEAM OUTPUT SYSTEM**

(30) Priority: 21.11.2022 CN 202211454175
(71) Applicant: ZHU, Jianxin, Shenyang, Liaoning 110169 (CN)
(72) Inventor: ZHAO, Shiyao, Shenyang, Liaoning 110169 (CN); ZHANG, Shuai, Shenyang, Liaoning 110169 (CN); ZHU, Yuhui, Shenyang, Liaoning 110169 (CN); ZHU, Jianxin, Shenyang, Liaoning 110169 (CN)
(74) Representative: Stiel, Jürgen
(86) International application number: PCT/CN2023/071478
(87) International publication number: WO 2024/108752

(57) **Abstract**

A solid electric thermal storage superheated steam output system is provided, including: a solid electric thermal storage unit, a superheated steam heat exchanger, a saturated steam heat exchanger, a water preheating heat exchanger, a steam drum, a variable-frequency fan, an air duct, a preheating steam tank, a superheated steam unit and a deaerator. Through the high-temperature air duct, the superheated steam heat exchanger, the saturated steam heat exchanger and the water preheating heat exchanger, heat exchange is performed under the drive of the variable-frequency fan to finally generate superheated steam for use of a heat consumer. The water preheating heat exchanger is connected to the preheating steam tank, heat generated after the superheated steam heat exchanger and the saturated steam heat exchanger exchange heat is used to generate low-temperature steam for thermal deoxygenation of the deaerator, while water flows into a deaerator water tank through an overflow pipe. The superheated steam unit is a structural combination including a steam drum as a core, sets of superheated steam heat exchangers, saturated steam heat exchangers, water preheating heat exchangers and corresponding accessories. An overall combined superheated steam system includes multiple superheated steam units.

## Description

### TECHNICAL FIELD

The present disclosure relates to the technical field of electric thermal storage, specifically, to a solid electric thermal storage superheated steam output system, which uses high-voltage and high-power solid electric thermal storage as the heat source, and realizes a thermal energy output to users by using a combined heat releasing structure of a plurality of sets of superheated steam units.

### BACKGROUND

At present, most industrial parks use boilers fueled with natural gas or coal to generate low-pressure or medium-pressure superheated steam with a temperature ranging from 200°C to 500°C to meet requirements of production processes. As the prices of natural gas and coal rise, the price per ton of superheated steam continues to rise, which greatly increases the production costs, and further increases the carbon emissions and the environmental pressure. If clean electric energies that cannot be fully utilized, such as electricity from curtailment of wind power or curtailment of photovoltaic power, is dispatched by the power network, a transmission and distribution power supply in a voltage level of 110 kV to 10 kV will be used to supply power to high-voltage and high-power solid electric thermal storage boilers, which may both improve the utilization rate of clean electric energy and greatly reduce the cost of producing superheated steam. By using cheap off-peak electricity or electricity from curtailment of wind power or curtailment of photovoltaic power as energy, high-voltage and high-power solid electric thermal storage boilers may completely replace coal-fired, gas-fired boilers to provide heat for the users. After applying for a patent titled "Solid Thermal Storage System with Superheated Steam Heat Exchanger" in October, 2018 (Patent Application No. 201821709649.0), the applicant has produced and delivered dozens of solid electric thermal storage steam boilers using this technology, providing users with the apparatus capable of producing stable steam and further providing the power network with the load that may absorb electricity from curtailment of wind power or curtailment of photovoltaic power. By summarizing four years of apparatus production and manufacturing experience, analyzing and comparing operating data obtained from delivery users, the inventors found that although disposing the superheated steam heat exchanger, the saturated steam heat exchanger and the preheating steam heat exchanger in the same fan heat exchange channel may improve the efficiency of the circulation fan, there are also defects such as the incapacity to separately adjust the working pressure of steam and the superheat temperature value of the steam, and the inapplicability for users with higher requirements for superheated steam parameters; the flow of low-temperature water in the preheating steam heat exchanger is controlled by the water supply pump, and vaporization may sometimes occur since the water in the preheating steam heat exchanger stops flowing during a period when water is not required to be supply to the steam drum; the existing technology does not consider the heat supply problem of the water supply deaerator, and the main steam is consumed to provide heat for the deaerator if the user purchases an additional thermal deaerator, which may cause a reduction of the superheated steam output capability of the apparatus and a waste of the high-quality steam.

### SUMMARY

In view of the above existing problems, the present disclosure provides a solid electric thermal storage superheated steam output system, which uses a high-voltage and high-power solid electric thermal storage unit as a heat source and includes a combination of a plurality of sets of superheated steam units.

The solution of the present disclosure is as follows. A solid electric thermal storage superheated steam output system is provided, including one, two or more superheated steam units, a deaerator, a main water supply pump, a main water supply source and a preheating water supply pump which are all connected through pipes; the superheated steam unit includes one, two or more heat storage and release units, a steam drum, a water level gauge, an evaporation water supply pump and corresponding pipes connected therebetween; the heat storage and release unit includes a solid electric thermal storage unit, a superheated steam heat exchanger, a saturated steam heat exchanger, a water preheating heat exchanger, a variable-frequency fan, an upper variable-frequency fan, an air return pipe, an upper air return pipe, a high-temperature air duct, an upper high-temperature air duct, a preheating steam tank and corresponding pipes connected therebetween; the solid electric thermal storage unit includes a solid energy storage body, a thermal insulation layer, a high-voltage insulation pillar, a high-temperature air region and a low-temperature air region. A loop is constituted by sequentially connecting the solid electric thermal storage unit, the high-temperature air duct, the saturated steam heat exchanger, the water preheating heat exchanger, the variable-frequency fan and the air return pipe, and another loop is constituted by sequentially connecting the solid electric thermal storage unit, the upper high-temperature air duct, the superheated steam heat exchanger, the water preheating heat exchanger, the upper variable-frequency fan and the upper air return pipe; the superheated steam heat exchanger is connected to a superheated steam output flange interface A through a superheated steam pipe branch and a superheated steam pipe, and is connected to the steam drum through a saturated steam pipe branch and a saturated steam pipe; the saturated steam heat exchanger is connected to the steam drum through an evaporation pipe branch, an evaporation pipe, a condensation descending pipe branch and a condensation descending pipe, and is connected to an evaporation water supply pipe flange interface A through an evaporation water supply pipe branch, an evaporation water supply pipe and an evaporation water supply pump; the water preheating heat exchanger is connected to the preheating steam tank, and is connected to a preheating water supply pipe flange interface A through a preheating water supply pipe branch and a preheating water supply pipe; the preheating steam tank is connected to a preheating steam output flange interface A through a preheating steam pipe branch and a preheating steam pipe, and is connected to an overflow pipe flange interface A through an overflow pipe branch and an overflow pipe; the superheated steam unit is connected to a heat consumer through the superheated steam output flange interface A, a superheated steam output main pipe and a superheated steam output flange interface B, the superheated steam unit is connected to the deaerator through the preheating steam output flange interface A, the preheated steam output main pipe and a superheated steam output flange interface B, the superheated steam unit is connected to a deaerator water tank through the overflow pipe flange interface A, an overflow main pipe and an overflow pipe flange interface B, the superheated steam unit is connected to the deaerator water tank through the preheating water supply pipe flange interface A, a preheating water supply main pipe, the preheating water supply pump and a preheating water supply pipe flange interface B, and the superheated steam unit is connected to the deaerator water tank through the evaporation water supply pipe flange interface A, an evaporation water supply main pipe and an evaporation water supply pipe flange interface B; and the deaerator is connected to the main water supply source through a main water supply flange interface and the main water supply pump.

According to the present disclosure, the superheated steam unit is a structural combination including the steam drum, one, two or more heat storage and release units and corresponding accessories, and the steam drum serves as a core of the structural combination.

The present disclosure has the following advantages and effects. The technical solution provided by the present disclosure leaves out the structure in the above-mentioned patent application, in which the all the superheated steam heat exchanger, the saturated steam heat exchanger and the water preheating heat exchanger are connected in series in the same air duct, and the output of the water preheating heat exchanger is connected to the saturated steam heat exchanger. Since the three heat exchangers in the technical solution of Application No. 201821709649.0 are all connected in series in the same circulating air duct and their air volumes are controlled by the same variable-frequency fan, and since heat required by the superheated steam heat exchanger and heat required by the saturated steam heat exchanger are not completely synchronized, the system cannot meet heat exchange conditions of the two heat exchangers at the same time during operation. In addition, such structure is prone to causing vaporization in the water preheating heat exchanger, affecting the operation effect. In the structure provided by the present disclosure, the superheated steam heat exchanger and the saturated steam heat exchanger are arranged in parallel and respectively connected to high-temperature air ducts. Air flows of the superheated steam heat exchanger and the saturated steam heat exchanger are respectively controlled by respective variable-frequency fans to adapt to their respective heat demands, so that the heat consumption of the two heat exchangers no longer conflicts with each other, thereby ensuring that the operation of the system and the steam parameters are both stable to meet the user needs. The water preheating heat exchanger is arranged in the high-temperature air duct of the superheated steam heat exchanger and the high-temperature air duct of the saturated steam heat exchanger to further cool the two high-temperature air ducts, so that a cooling gradient of the circulating air may be increased, thereby improving the heat release efficiency of the circulating air and reducing the working temperature of fan blades. The output of the water preheating heat exchanger is no longer connected to the saturated steam heat exchanger, but connected to the preheating steam tank, heat generated after the superheated steam heat exchanger and the saturated steam heat exchanger exchange heat is used to generate low-temperature steam, which is supplied to the deaerator for thermal deoxygenation. Meanwhile, water flows into the deaerator water tank through the overflow pipe. When the system is not operating, even if there is heat radiation, vaporization will not occur when the water preheating heat exchanger absorbs heat and performs heat exchange since the preheating water supply pump keeps working, and an overtemperature damage to the variable-frequency fan will not occur, neither.

### BRIEF DESCRIPTION OF THE DRAWINGS

FIG. 1 shows a schematic diagram of a composition of a single superheated steam unit according to the present disclosure;
FIG. 2 shows a schematic diagram of a combination system of superheated steam units according to the present disclosure; and
FIG. 3 shows a schematic diagram of a structure of a solid electric thermal storage unit according to the present disclosure.

### References signs:

1. Solid energy storage body; 2. Thermal insulation layer; 3. Superheated steam heat exchanger; 4. Saturated steam heat exchanger; 5. Water preheating heat exchanger; 6. Steam drum (saturated steam tank); 9. Variable-frequency fan; 9-1. Upper variable-frequency fan; 10. Air return pipe; 10-1. Upper air return pipe; 14. Superheated steam pipe; 14-1. Superheated steam pipe branch; 16. Heat consumer; 17. Hot air vent array; 19. Saturated steam pipe; 19-1. Saturated steam pipe branch; 20. Solid electric thermal storage unit; 20-1. Electric heating wire; 20-2. High-voltage insulation pillar; 20-3. High-temperature air region; 20-4. Low-temperature air region; 20-5. High-voltage electricity lead electrode; 21. High-temperature air duct; 21-1, Upper high-temperature air duct; 22. Evaporation pipe; 22-1. Evaporation pipe branch; 23. Condensation descending pipe; 23-1. Condensation descending pipe branch; 24. Preheating steam tank; 25. Preheating steam pipe; 25-1. Preheating steam pipe branch; 26. Overflow pipe; 26-1. Overflow pipe branch; 27. Controller; 28. Water level gauge; 29. Evaporation water supply pump; 30. Superheated steam unit; 30-1. Heat storage and release unit; 31. Superheated steam output main pipe; 31-1. Superheated steam output flange interface A; 31-2. Superheated steam output flange interface B; 32. Preheating steam output main pipe; 32-1. Preheating steam output flange interface A; 32-2. Preheating steam output flange interface B; 33. Overflow main pipe; 33-1. Overflow pipe flange interface A; 33-2. Overflow pipe flange interface B; 34. Preheating water supply main pipeline; 34-1. Preheating water supply pipe flange interface A; 34-2. Preheating water supply pipe flange interface B; 34-3. Preheating water supply pipe; 34-4. Preheating water supply pipe branch; 35. Evaporation water supply main pipe; 35-1. Evaporation water supply pipe flange interface A; 35-2. Evaporation water supply pipe flange interface B; 35-3. Evaporation water supply pipe; 35-4. Evaporation water supply pipe branch; 36. Preheating water supply pump; 37. Deaerator; 38. Deaerator exhaust valve; 39. Deaerator water tank; 40. Main water supply flange interface; 41. Main water supply pump; and 42. Main water supply source.

The accompanying drawings are only schematic diagrams of embodiments of the present disclosure, and for those of ordinary skill in the art, other drawings may be obtained based on this set of accompanying drawings without creative efforts.

### DETAILED DESCRIPTION OF EMBODIMENTS

Specific embodiments of the present disclosure will be described in detail below with reference to the accompanying drawings. The following descriptions are only for demonstration and explanation, and do not constitute any formal limitations on the present disclosure.

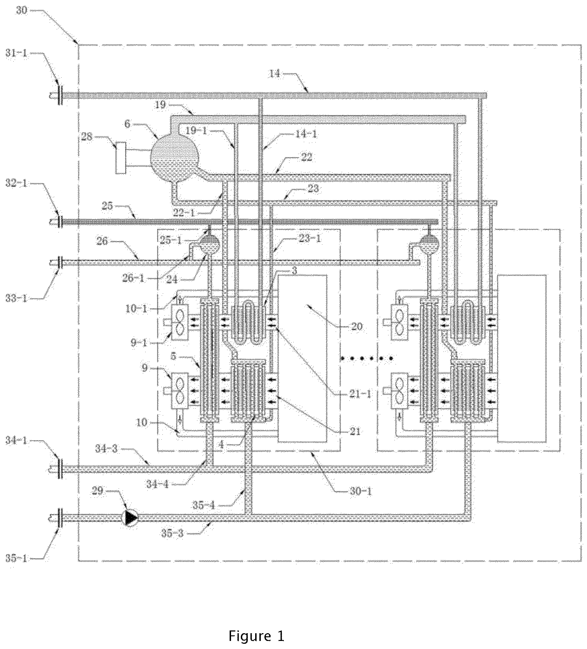

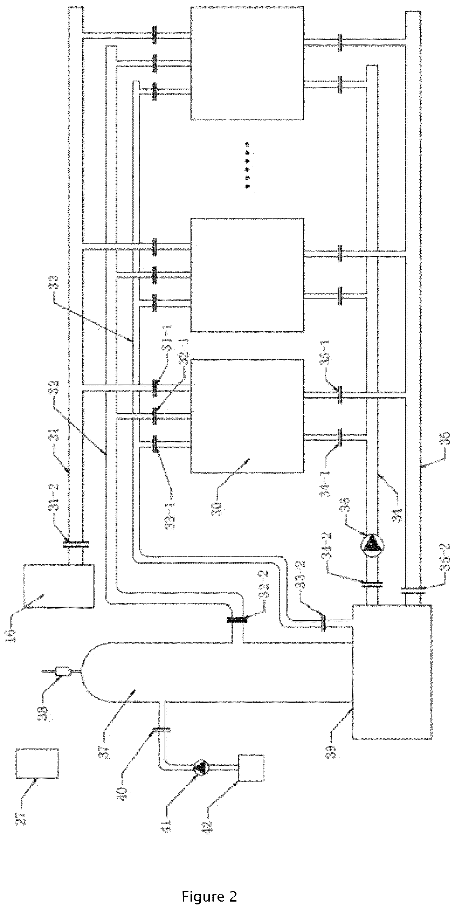

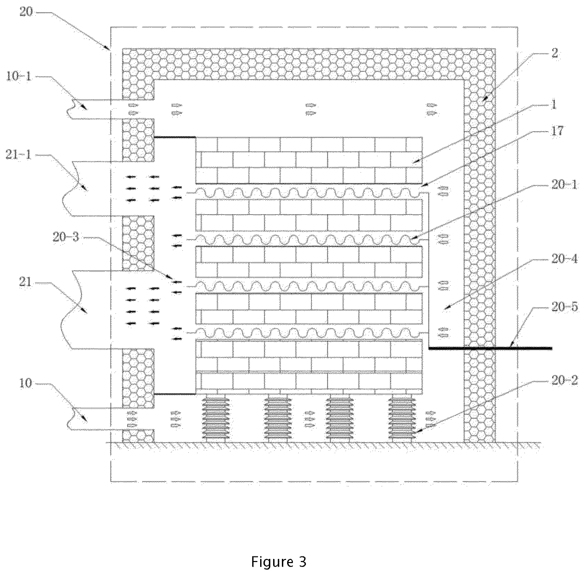

As shown in FIG. 1 to FIG. 3, the embodiments provide a solid thermal storage superheated steam output system, which uses a high-voltage and high-power solid electric thermal storage unit as a heat source and includes a combination of one, two or more superheated steam units. The system includes: a solid electric thermal storage unit 20, a superheated steam heat exchanger 3, a saturated steam heat exchanger 4, a water preheating heat exchanger 5, a steam drum (saturated steam tank) 6, a variable-frequency fan 9, an upper variable-frequency fan 9-1, an air return pipe 10, an upper air return pipe 10-1, a heat consumer 16, a high-temperature air duct 21, an upper high-temperature air duct 21-1, a preheating steam tank 24, a controller 27, a water level gauge 28, an evaporation water supply pump 29, a superheated steam unit 30, a heat storage and release unit 30-1, a preheating water supply pump 36, a deaerator 37, a deaerator water tank 39, main water supply flange interface 40, a main water supply pump 41, a main water supply source 42, and various pipes and flanges. The solid electric thermal storage unit 20 forms a loop by connecting the high-temperature air duct 21, the saturated steam heat exchanger 4, the water preheating heat exchanger 5, the variable-frequency fan 9 and the air return pipe 10, and forms another loop by connecting the upper high-temperature air duct 21-1, the superheated steam heat exchanger 3, the water preheating heat exchanger 5, the upper variable-frequency fan 9-1 and the upper air return pipe 10-1. Inside the solid electric thermal storage unit 20, the air return pipe 10 and the upper air return pipe 10-1 are connected to a low-temperature air region 20-4, and is connected to the high-temperature air duct 21 and the upper high-temperature air duct 21-1 through a hot air vent array 17 and a high-temperature air region 20-3. The superheated steam heat exchanger 3 is connected to a superheated steam output flange interface A 31-1 through a superheated steam pipe branch 14-1 and a superheated steam pipe 14, and is connected to the steam drum 6 through a saturated steam pipe branch 19-1 and a saturated steam pipe 19. The saturated steam heat exchanger 4 is connected to the steam tank 6 through an evaporation pipe branch 22-1, an evaporation pipe 22, a condensation descending pipe branch 23-1 and a condensation descending pipe 23, and is connected to an evaporation water supply pipe flange interface A 35-1 through an evaporation water supply pipe branch 35-4, an evaporation water supply pipe 35-3 and an evaporation water supply pump 29. The water preheating heat exchanger 5 is connected to the preheating steam tank 24, and is connected to a preheating water supply pipe flange interface A 34-1 through a preheating water supply pipe branch 34-4 and a preheating water supply pipe 34-3. The preheating steam tank 24 is connected to a preheating steam output flange interface A 32-1 through a preheating steam pipe branch 25-1 and a preheating steam pipe 25, and is connected to an overflow pipe flange interface A33-1 through an overflow pipe branch 26-1 and an overflow pipe 26. The superheated steam unit 30 is connected to a heat consumer 16 through the superheated steam output flange interface A 31-1, a superheated steam output main pipe 31 and a superheated steam output flange interface B 31-2. The superheated steam unit 30 is connected to the deaerator 37 through the preheating steam output flange interface A 32-1, a preheating steam output main pipe 32 and a preheating steam output flange interface B 32-2. The superheated steam unit 30 is connected to a deaerator water tank 39 through the overflow pipe flange interface A 33-1, an overflow main pipe 33 and an overflow pipe flange interface B 33-2. The superheated steam unit 30 is connected to the deaerator water tank 39 through the preheating water supply pipe flange interface A 34-1, a preheating water supply main pipe 34, a preheating water supply pump 36 and a preheating water supply pipe flange interface B 34-2. The superheated steam unit 30 is connected to the deaerator water tank 39 through the evaporation water supply pipe flange interface A 35-1, an evaporation water supply main pipe 35 and an evaporation water supply pipe flange interface B 35-2. The deaerator 37 is connected to a main water supply source 42 through the main water supply flange interface 40 and the main water supply pump 41.

A selection of the solid electric thermal storage superheated steam output system is as follows. The system mainly includes a combination of one, two or more superheated steam units 30. The superheated steam unit 30 includes a single steam drum 6 and a plurality of heat storage and release units 30-1. The heat storage and release unit 30-1 includes the solid electric thermal storage unit 20, the superheated steam heat exchanger 3, the saturated steam heat exchanger 4, the water preheating heat exchanger 5, the variable-frequency fan 9, the upper variable-frequency fan 9-1, etc. By adopting a unit configuration, it is possible to arrange device components more flexibly, and the device maintenance may be more convenient. A mass ratio and a quantity ratio of the heat storage and release unit 30, that is, a modular correspondence between the solid electric thermal storage unit 20, and the superheated steam heat exchanger 3, the saturated steam heat exchanger 4, the water preheating heat exchanger 5, the variable-frequency fan 9 and the upper variable-frequency fan 9-1 may be configured based on the user's requirements for steam parameters and heat storage to constitute the superheated steam unit 30. Finally, the superheated steam units 30 are flexibly arranged to constitute the complete solid electric thermal storage superheated steam output system according to the user's site. The present disclosure mainly solves the output steam parameter stability problem, the supplied water deoxygenation problem, the preheater anti-vaporization problem, the cooling problem of the terminal variable-frequency fan 9 and the upper variable-frequency fan 9-1, and the flexible layout of the unit structure.

A stable steam output process is as follows. Deoxygenated water is supplied to each superheated steam unit 30 through the controller 27 of the device. The deoxygenated water enters the evaporation water supply pipe flange interface A 35-1, and is evenly distributed to each heat storage and release unit 30-1 through the evaporation water supply pipe 35-3 after being pressurized by the evaporation water supply pump 29, each heat storage and release unit 30-1 enters the saturated steam heat exchanger 4 through the evaporation water supply pipe branch 35-4. The variable-frequency fan 9 is activated to store thermal energy in the solid electric thermal storage unit 20. Circulating air passing the low-temperature air region 20-4, after being heated by the hot air vent array 17 of the solid energy storage body 1, enters the saturated steam heat exchanger 4 through the high-temperature air duct 21 to exchange heat with the pressurized deoxygenated water. After the heat exchange, the hot circulating air passes through the water preheating heat exchanger 5 for secondary heat exchange and cooling, and is sent back to the low-temperature air region 20-4 through the air return pipe 10. An air volume of the variable-frequency fan 9 is adjusted through the controller 27, thereby adjusting a thermal energy output. A constant temperature heating is performed according to steam pressure requirements of the heat consumer 16, so that the pressurized deoxygenated water is heated into saturated pressure water. The saturated pressure water from the saturated steam heat exchanger 4 in each heat storage and release unit 30-1 passes through the evaporation pipe branch 22-1 to be collected through the evaporation pipe 22, and is then input into the steam drum 6 for water and vapor separation, so as to form saturated steam and undersaturated pressure water. The undersaturated pressure water is evenly distributed from the condensation descending pipe 23 to each saturated steam heat exchanger 4 through each condensing descending pipe branch 23-1 for two-time or multiple times heating. The process of heating and water and vapor separation is repeatedly circulated to constitute a natural circulating system due to a water density difference between the undersaturated pressure water and the saturated pressure water. A height of an evaporation surface of the steam drum 6 may be accurately adjusted using the controller 27 and the water level gauge 28. The saturated steam is evenly distributed from the saturated steam pipe 19 to each superheated steam heat exchanger 3 for superheating through each saturated steam pipe branch 19-1. The upper variable-frequency fan 9-1 is activated.to store thermal energy in an upper part of the solid electric thermal storage unit 20. Circulating air passing low-temperature air region 20-4, after being heated by the hot air vent array 17 of the solid energy storage body 1, enters the superheated steam heat exchanger 3 through the high-temperature air duct 21-1 to exchange heat with the saturated steam. After the heat exchange, the hot circulating air passes through the water preheating heat exchanger 5 for secondary heat exchange and cooling, and is sent back to the low-temperature air region 20-4 through the upper air return pipe 10-1. An air volume of the upper variable-frequency fan 9-1 is adjusted through the controller 27, thereby adjusting a thermal energy output. A constant temperature heating is performed according to steam temperature requirements of the heat consumer 16, so that the saturated steam is heated into superheated steam. The superheated steam output by the superheated steam heat exchanger 3 in each heat storage and release unit 30-1 is collected by the hot steam pipe 14 through each superheated steam pipe branch 14-1, and is output through the superheated steam output flange interface A 31-1 of the superheated steam unit 30.

A supplied water deoxygenation process and a terminal fan cooling process are as follows. The supplied water deoxygenation process of the device is comprehensively improved in combination with the traditional thermal deoxygenation method, forming a comprehensive efficiency system in which the supplied water deoxygenation serves as a main part, and the terminal fan cooling serves as a supplemented part. Through the controller 27 of the device, the supplied water is pressurized, by the main water supply pump 41, from the main water supply source 42 to the main water supply flange interface 40, enters the deaerator 37 for supplied water atomization, then performs heat exchange with the saturated steam with adjustable internal pressure from the preheating steam output flange interface B 32-2, so as to achieve a supplied water thermal deoxygenation. Oxygen extracted from the supplied water is discharged through a deaerator exhaust valve 38, and the deoxygenated water enters the deaerator water tank 39. The preheating water supply pump 36 is activated. The deoxygenated water in the deaerator water tank 39 passing the preheating water supply pipe flange interface B 34-2 is pressurized through the preheating water supply pump 36 so as to be distributed to each superheated steam unit 30 through the preheating water supply main pipe 34. The deoxygenated water enters the superheated steam unit 30 through the preheating water supply pipe flange interface A 34-1, and is evenly distributed to the water preheating heat exchanger 5 of each heat storage and release unit 30-1 through each preheating water supply pipe 34-3. The deoxygenated water is introduced into the water preheating heat exchanger 5 through the preheating water supply pipe branch 34-4, and performs heat exchange with the hot circulating air from the variable-frequency fan 9 and the upper variable-frequency fan 9-1, corresponding to the secondary heat exchange and cooling of the hot circulating air during the stable steam output process. After the heat exchange, the deoxygenated water is heated so as to form the saturated water with adjustable internal pressure in the deaerator 37. The saturated water with adjustable internal pressure enters the preheating steam tank 24 for water and vapor separation, and the undersaturated water and saturated steam are formed. The undersaturated water from each heat storage and release unit 30-1 passing the overflow pipe branch 26-1 is collected by the overflow pipe 26 and output to the overflow pipe flange interface A 33-1. Then, the undersaturated water is collected to the overflow pipeline flange interface B 33-2 through the overflow main pipe 33 to enter the deaerator water tank 39, thereby forming a closed and forced circulation loop. After the saturated steam generated by the preheating heat exchanger 5 of each heat storage and release unit 30-1 is collected to the preheating steam pipe 25 through the steam pipe branch 25-1, the saturated steam is output from the preheating steam output flange interface A 32-1 of each superheated steam unit 30 to the preheating steam output main pipe 32, and then enters the deaerator 37 through the preheating steam output flange interface B 32-2 for heat exchange with the atomized supplied water, so as to achieve the supplied water thermal deoxygenation. In this way, a closed and forced circulation system is formed, which may achieve the supplied water deoxygenation process and the terminal fan cooling process.

A heat storage process is as follows. One, two or more solid electric thermal storage units 20 constitute an electric heating part and a heat and energy storage part of the solid electric thermal storage superheated steam output system. In the heat storage process, the controller 27 of the device is used to perform an electrical heating on the solid electric thermal storage unit 20 to store energy. A power supply of 110 kV to 10 kV, provided by an external power network, is connected to an electric heating wire 20-1 arranged in the hot air vent array 17 of the solid energy storage body 1 through a high-voltage electricity lead electrode 20-5, where the electric heating wire 20-1 is used to convert electrical energy into thermal energy so as to store the thermal energy in the solid energy storage body 1. A thermal insulation layer 2 is used to achieve a thermal insulation between the device and the outside, and a high-voltage insulation pillar 20-2 is used to insulate the device from the ground and carry the solid energy storage body 1. When an energy storage temperature of the device reaches an upper limit of a rated temperature, the heat storage process stops.

A heat release process is as follows. Through the device controller 27, the supplied water is deoxygenated during the supplied water deoxygenation process and the terminal fan cooling process. The deoxygenated water passing the evaporative water supply pipe flange interface B 35-2 in the deaerator water tank 39 is distributed to each superheated steam unit 30 through the evaporative water supply main pipeline 35. The superheated steam output through the stable steam output process of each superheated steam unit 30 is collected to the superheated steam output main pipe 31 through the superheated steam output flange interface A 31-1, and passes the superheated steam output main pipe 31 to reach the heat consumer 16 through the superheated steam output flange interface B 31-2. When the superheated temperature of the steam or the steam pressure does not meet the requirements of the heat consumer 16, the heat release process stops.

At last, it should be noted that the above specific embodiments are only used to illustrate technical solutions of the present disclosure and not to limit it. Although the present disclosure has been described in detail, those of ordinary skill in the art will understand that, modifications or equivalent substitutions may be made to the embodiments of the present disclosure without departing from the spirit and scope of the embodiments, which should all be included in the scope of claims of the present disclosure.

## Claims

1. A solid electric thermal storage superheated steam output system, including one, two or more superheated steam units, a deaerator, a main water supply pump, a main water supply source and a preheating water supply pump which are all connected through pipes; the superheated steam unit comprises one, two or more heat storage and release units, a steam drum, a water level gauge, an evaporation water supply pump and corresponding pipes connected therebetween; the heat storage and release unit comprises a solid electric thermal storage unit, a superheated steam heat exchanger, a saturated steam heat exchanger, a water preheating heat exchanger, a variable-frequency fan, an upper variable-frequency fan, an air return pipe, an upper air return pipe, a high-temperature air duct, an upper high-temperature air duct, a preheating steam tank and corresponding pipes connected therebetween; the solid electric thermal storage unit comprises a solid energy storage body, a thermal insulation layer, a high-voltage insulation pillar, a high-temperature air region and a low-temperature air region,
wherein a loop is constituted by sequentially connecting the solid electric thermal storage unit, the high-temperature air duct, the saturated steam heat exchanger, the water preheating heat exchanger, the variable-frequency fan and the air return pipe, and another loop is constituted by sequentially connecting the solid electric thermal storage unit, the upper high-temperature air duct, the superheated steam heat exchanger, the water preheating heat exchanger, the upper variable-frequency fan and the upper air return pipe; the superheated steam heat exchanger is connected to a superheated steam output flange interface A through a superheated steam pipe branch and a superheated steam pipe, and is connected to the steam drum through a saturated steam pipe branch and a saturated steam pipe; the saturated steam heat exchanger is connected to the steam drum through an evaporation pipe branch, an evaporation pipe, a condensation descending pipe branch and a condensation descending pipe, and is connected to an evaporation water supply pipe flange interface A through an evaporation water supply pipe branch, an evaporation water supply pipe and an evaporation water supply pump; the water preheating heat exchanger is connected to the preheating steam tank, and is connected to a preheating water supply pipe flange interface A through a preheating water supply pipe branch and a preheating water supply pipe; the preheating steam tank is connected to a preheating steam output flange interface A through a preheating steam pipe branch and a preheating steam pipe, and is connected to an overflow pipe flange interface A through an overflow pipe branch and an overflow pipe; the superheated steam unit is connected to a heat consumer through the superheated steam output flange interface A, a superheated steam output main pipe and a superheated steam output flange interface B, the superheated steam unit is connected to the deaerator through the preheating steam output flange interface A, the preheated steam output main pipe and a superheated steam output flange interface B, the superheated steam unit is connected to a deaerator water tank through the overflow pipe flange interface A, an overflow main pipe and an overflow pipe flange interface B, the superheated steam unit is connected to the deaerator water tank through the preheating water supply pipe flange interface A, a preheating water supply main pipe, the preheating water supply pump and a preheating water supply pipe flange interface B, and the superheated steam unit is connected to the deaerator water tank through the evaporation water supply pipe flange interface A, an evaporation water supply main pipe and an evaporation water supply pipe flange interface B; and the deaerator is connected to the main water supply source through a main water supply flange interface and the main water supply pump.

2. The solid electric thermal storage superheated steam output system according to claim 1, wherein the superheated steam unit is a structural combination comprising the steam drum, one, two or more heat storage and release units and corresponding accessories, and the steam drum serves as a core of the structural combination.
